# EUROPEAN PATENT APPLICATION

(11) **EP 1 574 330 A1**
(43) Date of publication of application: **14.09.2005**
(21) Application number: 03780807.8
(22) Date of filing: 16.12.2003
(51) Int. Cl.: B32B 27/34

(54) **LAMINATE STRUCTURE EXCELLING IN FUEL PERMEATION PREVENTING PERFORMANCE**

(30) Priority: 17.12.2002 JP 2002364666
(71) Applicant: Ube Industries, Ltd., Yamaguchi 755-8633 (JP)
(72) Inventor: NAKAMURA, Ken.,Ube Chem. Fact.,Ube Industries Ltd, Ube-shi, Yamaguchi 755-8633 (JP); NAKAMURA, Koji.,Ube Chem. Fact.,Ube Industries Ltd, Ube-shi, Yamaguchi 755-8633 (JP)
(74) Representative: Wössner, Gottfried
(86) International application number: PCT/JP2003/016129
(87) International publication number: WO 2004/054802

(57) **Abstract**

The present invention relates to a multilayer structure with an excellent performance for preventing fuel permeation and, particularly, permeation of automobile fuel. More specifically, the present invention relates to a multilayer structure, having an excellent performance for preventing permeation of gasoline or gasohol (a mixture of gasoline and alcohol) in a high-temperature environment and excellent stress cracking resistance during gasohol immersion, which can be suitably used for fuel parts for the storage or transportation of fuel, such as a gasoline tank and tubes. The multilayer structure is **characterized by** comprising at least two layers of saponified ethylene-vinyl acetate copolymer layer and polyamide layer, the polyamide layer comprising 100 parts by weight of a polyamide resin and from 0.2 to 5 parts by weight of a layered silicate uniformly dispersed in the polyamide resin.

## Description

### TECHNICAL FIELD

The present invention relates to a multilayer structure, with excellent performance, for fuel barrier and, particularly, the barrier of automobile fuel. More specifically, the present invention relates to a multilayer structure having an excellent performance for barrier of gasoline or alcohol-containing gasohol (a mixture of gasoline and alcohol) in a high-temperature environment and excellent stress cracking resistance during gasohol immersion, which can be suitably used for fuel parts (fuel-related parts) for the storage or transportation of fuel, such as a gasoline tank and a tube.

### BACKGROUND ART

As for an automobile fuel tank, a plastic-made fuel tank has been conventionally used, because a reduction of weight brought the low consumption and a free shape and, furthermore, the number of production steps can be decreased. The material predominantly used for a plastic-made fuel tank is a high-density polyethylene, but a fuel readily permeates through a high-density polyethylene. Therefore, in view of safety and environment, it is necessary to decrease the amount of evaporative hydrocarbon emissions from the fuel tank.

In order to prevent the fuel permeation from the fuel tank, for example, a method of dispersing of a barrier resin such as polyamide in a continuous matrix phase of polyethylene (see, for example, Japanese Examined Patent Publication (Kokoku) No. 60-14695 and Japanese Unexamined Patent Publication (Kokai) No. 61-283523), a method of forming a multilayer structure using a saponified ethylene-vinyl acetate copolymer (EVOH) as a barrier layer (see, for example, Japanese Unexamined Patent Publication (Kokai) No. 10-156978), and a method of forming a multilayer structure using a polyamide as a barrier layer (see, for example, Japanese Unexamined Patent Publication (Kokai) Nos. 58-220738 and 9-39176) have been developed. Furthermore, a technique of enhancing the fuel barrier property by dispersing a layered silicate in a polyamide has been proposed (see, for example, Japanese Unexamined Patent Publication (Kokai) No. 8-127089).

However, the method of dispersing polyamide in polyethylene cannot demand the recent strict emission regulations.

The method of using an EVOH as a barrier layer has a problem that, for example, in a direct fuel injection engine, the fuel partially returns to cause elevation of the fuel temperature in the tank up to 60 to 80°C and, in such an environment exceeding the glass transition temperature (about 55 to 60°C) of EVOH, the fuel barrier performance decreases, though an excellent fuel barrier performance is found at ordinary temperatures.

On the other hand, when a fuel tank using an EVOH barrier layer and, for example, a fuel tank having a three-resin five-layer multilayer constitution of high-density polyethylene (HDPE)/adhesive resin (Ad)/EVOH/Ad/HDPE, is stored for a long time in the state of containing gasoline of various types, the fuel barrier property sometimes abruptly decreases because small cracks are generated in a part of the tank. This is considered to be attributable to the fact that the swellability (dimensional change) in gasoline of HDPE and Ad greatly differs from that of EVOH to cause an abnormal stress on EVOH at the time of filling gasoline in the multilayer constitution container and stress cracking is readily generated in EVOH during gasohol immersion.

In order to solve this problem, a barrier layer formed of a composition comprising EVOH having blended therein at least one thermoplastic resin selected from a polyamide, a polyolefin and a polyester has been proposed. However, this technique has a problem that the fuel barrier property and, particularly, the fuel barrier property in a high-temperature, high-humidity environment changes for the worse. Therefore, one of important problems to be solved is to develop a multilayer structure satisfactory in both stress cracking resistance and fuel barrier property for gasoline and, particularly, alcohol-containing gasoline.

The present invention has been made by taking account of these problems in conventional techniques and an object of the present invention is to provide a multilayer structure having excellent fuel barrier performance and, particularly, a performance for barrier of an automobile fuel such as gasoline and alcohol-containing gasohol (a mixture of gasoline and alcohol) in a high-temperature environment, and having excellent stress cracking resistance during gasohol immersion, which can be suitably used for fuel parts for the storage or transportation of fuel, such as a gasoline tank and a tube.

### DISCLOSURE OF THE INVENTION

As a result of intensive investigations to attain this object, the present inventors have found that when an EVOH layer and a polyamide layer having dispersed therein a layered silicate are used in combination as the barrier layer, an excellent performance of barrier of an alcohol-containing fuel in a high-temperature environment and excellent stress cracking resistance during gasohol immersion can be realized. The above-described object can be attained by this finding.

That is, the present invention provides the following.
(1) A multilayer structure, with excellent fuel barrier performance, comprising at least two layers of EVOH layer and polyamide layer, the polyamide layer comprising 100 parts by weight of a polyamide resin and from 0.2 to 5 parts by weight of a layered silicate uniformly dispersed in the polyamide resin.
(2) A multilayer structure, with excellent fuel barrier performance, comprising two polyamide layers having interposed therebetween a saponified ethylene vinyl acetate copolymer (EVOH) layer, the polyamide layer comprising 100 parts by weight of a polyamide resin and from 0.2 to 5 parts by weight of a layered silicate uniformly dispersed in the polyamide resin.
(3) The multilayer structure as described in (1) or (2) above, which further comprises a polyolefin layer.
(4) The multilayer structure as described in (3) above, wherein the polyolefin is modified with an unsaturated carboxylic acid or a derivative thereof.
(5) The multilayer structure as described in (3) above, wherein the EVOH layer or polyamide layer and the polyolefin layer are stacked through a polyolefin layer modified with an unsaturated carboxylic acid or a derivative thereof.
(6) The multilayer structure as described in (1) or (2) above, wherein the layered silicate has a one-side length of 0.002 to 1 µm and a thickness of 6 to 20 Å and is uniformly dispersed in the polyamide resin while keeping each interlayer distance 20 Å or more, on average.
(7) The multilayer structure as described in any one of (1) to (6) above, wherein the thickness of the EVOH layer is from 3 to 40% of the thickness of the entire multilayer structure and the thickness of the polyamide layer stacked on the EVOH layer is from 30 to 200% of the thickness of the EVOH layer.
(8) A hollow container using the multilayer structure described in any one of (1) to (7) above.
(9) A fuel part using the multilayer structure described in any one of (1) to (7) above.

### BRIEF DESCRIPTION OF THE DRAWINGS

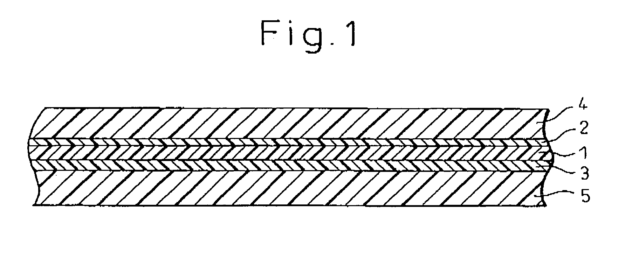

Fig. 1 is a side view schematically showing a representative structure of multilayer construction of the present invention.

### BEST MODE FOR CARRYING OUT THE INVENTION

The multilayer structure of the present invention is described in detail below.

In the multilayer structure of the present invention, the EVOH constituting the EVOH layer is a saponified ethylene-vinyl acetate copolymer, and those having an ethylene content of 20 to 70 mol%, preferably from 25 to 70 mol%, in which the saponification degree of the vinyl acetate component is 90% or more, preferably 95% or more, can be used. If the ethylene content is less than 20 mol%, the melt-formability is bad, whereas if it exceeds 70 mol%, the fuel barrier property is insufficient. Also, if the saponification degree is less than 90%, the fuel barrier property becomes bad.

In the EVOH layer, an antioxidant, a thermal stabilizer, a colorant, a flame retardant and the like may be appropriately blended, if desired.

In the multilayer structure of the present invention, the polyamide layer comprises 100 parts by weight of a polyamide resin and from 0.2 to 5 parts by weight of a layered silicate uniformly dispersed in the polyamide resin.

The polyamide resin for use in the present invention is a polymer having an acid amide bond (-CONH-) polymerized from, as the monomer, a lactam, an aminocarboxylic acid, or a diamine and a dicarboxylic acid.

Specific examples of the lactam include α-pyrrolidone, α-piperidonecaprolactam, ε-enantholactam, undecanelactam and dodecanelactam, and specific examples of the aminocarboxylic acid include 6-aminocaproic acid, 7-aminoheptanoic acid, 11-aminoundecanoic acid and 12-aminododecanoic acid.

Specific examples of the diamine include tetramethylenediamine, hexamethylenediamine, octamethylenediamine, nonamethylenediamine, undecamethylenediamine and dodecamethylenediamine.

Specific examples of the dicarboxylic acid include adipic acid, heptanedicarboxylic acid, octanedicarboxylic acid, nonanedicarboxylic acid, undecanedicarboxylic acid, dodecanedicarboxylic acid, sebacic acid, terephthalic acid, isophthalic acid and naphthalenedicarboxylic acid.

Specific examples of the polyamide resin formed from such monomer components include nylon 6, nylon 66, nylon 11 and nylon 12, and these polymers may be a homopolymer or a copolymer of two or more components.

The polyamide resin may be used alone or may be used in the form of a mixture with a polyamide resin polymerized from a different monomer. Furthermore, the polyamide resin may be used as a mixture with another polymer except for a polyamide resin and in this case, examples of the other polymer include polyethylene, polypropylene, ABS resin, polyphenylene oxide, polycarbonate, polyethylene terephthalate, polybutylene terephthalate, EPR, EBR, EPDM, ionomer resin, SEP resin and SEPS resin. In the case of using the polyamide resin in the form of such a mixture, the polyamide resin content is preferably 60 wt% or more.

The polymerization degree of the polyamide resin for use in the present invention is not particularly limited, but when 1 g of the polymer is dissolved in 100 ml of 96% concentrated sulfuric acid and the solution is measured at 25°C, the relative viscosity is preferably from 1.8 to 5.0, more preferably from 2.0 to 4.5. If the relative viscosity exceeds the upper limit of this range, the processability is seriously impaired, whereas if it is less than the lower limit, the mechanical strength disadvantageously decreases.

The layered silicate as another component constituting the polyamide layer preferably has a tabular shape with a one-side length of 0.002 to 1 µm and a thickness of 6 to 20 Å. Furthermore, when the layered silicate is dispersed in the polyamide resin, tabular grains are preferably uniformly dispersed while keeping each interlayer distance at 20 Å or more on average. The term "interlayer distance", as used herein, means a distance between gravitational centers of layered silicate particles having a tabular shape, and the term "uniformly dispersed" means that tabular particle sheets or layered materials having five layers or less on average are present in the parallel and/or random state and 50 wt% or more, preferably 70 wt% or more, of the layered silicate particles are dispersed without locally forming a mass.

Examples of the raw material for such a layered silicate include a layered phyllosilicate mineral constituted by a magnesium silicate or aluminum silicate layer. Specific examples thereof include smectite-type clay minerals such as montmorillonite, saponite, beidellite, nontronite, hectorite and stevensite, vermiculite, and halloysite. These may be a natural product or may be synthesized.

In the case where the layered silicate is a multilayer clay mineral, the polymerization may be performed to allow for uniform dispersion after previously contacting the layered silicate with a swelling agent such as amine (e.g., dioctadecylamine, phenylenediamine), amino acid (e.g., 4-amino-n-butyric acid, 12-aminododecanoic acid) and lactams (e.g., caprolactam), thereby expanding the interlayer distance and facilitating the intercalation of the monomer between layers. Furthermore, a method of previously expanding the interlayer distance to 20 Å or more by using a swelling agent, and melt-mixing the resulting silicate with a polyamide resin, thereby uniformly dispersing the layered silicate, may also be employed.

The ratio of the layered silicate is preferably from 0.2 to 5 parts by weight, more preferably from 1.5 to 5 parts by weight, per 100 parts by weight of the polyamide resin. If the ratio of the layered silicate is less than 0.2 parts by weight, the effect of fuel barrier is insufficient, whereas if it exceeds 5 parts by weight, this disadvantageously incurs reduction in the physical properties, particularly, impact strength, of the polymer.

In the polyamide resin, functionality-imparting agents such as plasticizer, heat-resistant agent, weather-resistant agent, crystal nucleus agent, crystallization accelerator, release agent, lubricant, antistatic agent, flame retardant, flame retardant aid and colorant may be appropriately blended, if desired.

More specifically, examples of the heat-resistant agent include hindered phenols, phosphites, thioethers and copper halides, and these may be used individually or in combination.

Examples of the weather-resistant agent include hindered amines and salicylates, and these may be used individually or in combination.

Examples of the crystal nucleus agent include inorganic fillers such as talc and clay, and organic crystal nucleus agents such as fatty acid metal salt, and these may be used individually or in combination.

Examples of the crystallization accelerator include low molecular weight polyamides, higher fatty acids, higher fatty acid esters and higher aliphatic alcohols, and these may be used individually or in combination.

Examples of the release agent include fatty acid metal salts, fatty acid amides and various waxes, and these may be used individually or in combination.

Examples of the antistatic agent include aliphatic alcohols, aliphatic alcohol esters and higher fatty acid esters, and these may be used individually or in combination.

Examples of the flame retardant include metal hydroxides such as magnesium hydroxide, phosphorus, ammonium phosphate, ammonium polyphosphate, melamine cyanurate, ethylenedimelamine dicyanurate, potassium nitrate, brominated epoxy compounds, brominated polycarbonate compounds, brominated polystyrene compounds, tetrabromobenzyl polyacrylate, tribromophenol polycondensates, polybromobiphenyl ethers, and chlorine-based flame retardants, and these may be used individually or in combination.

The multilayer structure of the present invention comprises at least two layers of EVOH layer and polyamide layer. In this way, when an EVOH layer and a polyamide layer are used in combination as the barrier layer, the stress cracking resistance during immersion in an alcohol-containing gasoline is enhanced while maintaining the performance of barrier of an alcohol-containing fuel in a high-temperature environment. The multilayer structure of the present invention may be a constitution where one EVOH layer and one polyamide layer are stacked, but when an EVOH layer is interposed between polyamide layers by stacking a polyamide layer on both surfaces of an EVOH layer, both the fuel barrier property and the stress cracking resistance can be more successfully achieved.

In the case of using the multilayer structure of the present invention for a hollow part such as a gasoline tank, the multilayer structure preferably further comprises a polyolefin layer. More specifically, a constitution where the above-described multilayer structure comprising an EVOH layer and a polyamide layer are further sandwiched by polyolefin layers is preferred.

The polyolefin constituting the polyolefin layer is a homopolymer or copolymer of an α-olefin such as ethylene, propylene, 1-butene and 1-octene, or a diolefin such as butadiene. Examples thereof include the followings:
(1) a homopolymer of polyethylene, particularly, LDPE (low-density polyethylene), HDPE (high-density polyethylene), LLDPE (linear low-density polyethylene), VLDPE (very low-density polyethylene) and metallocene polyethylene, and a homopolymer of propylene,
(2) an ethylene/α-olefin copolymer, such as ethylene/propylene, EPR (ethylene-propylene-rubber) and ethylene/propylene/diene (EPDM),
(3) a styrene/ethylene-butene/styrene block copolymer (SEBS), a styrene/butadiene/styrene block copolymer (SBS), a styrene/isoprene/styrene block copolymer (SIS) and a styrene/ethylene-propylene/styrene (SEPS) block copolymer, and
(4) a copolymer of ethylene and α,β-unsaturated carboxylic acid ester. Examples of the α,β-unsaturated carboxylic acid ester monomer include acrylic acid esters such as methyl acrylate, ethyl acrylate, propyl acrylate and butyl acrylate, and methacrylic acid esters such as methyl methacrylate, ethyl methacrylate, propyl methacrylate and butyl methacrylate.

In the present invention, the polyolefin constituting the polyolefin layer is preferably a polyolefin modified with an unsaturated carboxylic acid or a derivative thereof.

The modified polyolefin is a polymer obtained by graft-polymerizing an unsaturated carboxylic acid or a derivative thereof to the above-described polyolefin. The content of the unsaturated carboxylic acid or a derivative thereof used for the graft modification in the modified polyolefin is preferably 0.001 to 10 wt%, more preferably from 0.002 to 2 wt%. If the content of the unsaturated carboxylic acid or a derivative thereof used for the graft modification is too low, the adhesive strength is insufficient, whereas if it is excessively high, a crosslinking reaction readily takes place and the quality is hardly stabilized.

Examples of the unsaturated carboxylic acid or a derivative thereof used for the modification include unsaturated carboxylic acids such as acrylic acid, methacrylic acid, ethacrylic acid, maleic acid, fumaric acid, itaconic acid, citraconic acid and nadic acid, and derivatives thereof such as acid halide, amide, imide, anhydride and ester. Specific examples of the derivative include malenyl chloride, maleimide, maleic anhydride, monomethyl maleate and dimethyl maleate. Among these, unsaturated dicarboxylic acids and an anhydride thereof are preferred, and a maleic acid, a nadic acid and an acid anhydride thereof are more preferred.

As for the modification method, the modified polyolefin can be produced by a known production method of reacting an unmodified polyolefin and an unsaturated carboxylic acid, for example, in the melted state, in the solution state, in the slurry state or in the gas phase state.

In the present invention, the unmodified polyolefin layer and the EVOH or polyamide layer may also be stacked through a polyolefin layer modified with the above-described unsaturated carboxylic acid or a derivative thereof.

In the resin Constituting the polyolefin layer or modified polyolefin layer, known additives such as filler, stabilizer, lubricant, antistatic agent, flame retardant and defoaming agent may be blended within the range of not impairing the object of the present invention.

In the multilayer structure of the present invention, a reground layer may be further provided between the polyolefin layer and the modified polyolefin layer. The regroud layer comprises a composition obtained by grinding an unnecessary portion of the multilayer structure having a mixture of layers including EVOH layer, polyamide layer, polyolefin layer and modified polyolefin layer, or a recovered product of the laminae structure and, if desired, further melt-kneading the ground matter in an extrude or the like, and may be mixed within the range of not impairing the purpose of the multilayer structure. Also, the reground layer need not be formed of only the recovered resin described above but, for example, the polyolefin used for the polyolefin layer may be blended in the recovered resin to enhance the mechanical properties.

Examples of the layer constitution of the multilayer structure of the present invention includes not only a two-layer construction of EVOH layer (A) and polyamide layer (B) and a three-layer construction of (B)/(A)/(B) but also the following constitutions including a polyolefin layer (C) or a modified polyolefin layer (D):
(D)/(B)/(A), (D)/(A) /(B), (D)/(B)/(A)/(B), (C)/(D)/(B)/(A), (C)/(D)/(A)/(B), (C)/(D)/(B)/(A)/(B), (D)/(B)/(A)/(D), (D)/(A)/(B)/(D), (D)/(B)/(A)/(B)/(D), (C)/(D)/(B)/(A)/(D)/(C), (C)/(D)/(A)/(B)/(D)/(C) and (C)/(D)/(B)/(A)/(B)/(D)/(C).

In the multilayer structure of the present invention, a layer other than those described above may be added. Examples of the resin which can be used for the other layer include the followings. In the case where such a resin does not have adhesive property to the multilayer structure, the layer may be used through an adhesive layer. The resin layer used as the other layer may not be a single layer and several layers may be superposed. The resin usable as the other layer includes a fluororesin and examples of the fluororesin include polytetrafluoroethylene (PTEF), polyvinylidene fluoride (PVDF), polyvinyl fluoride (PVF), an ethylene/tetrafluoroethylene copolymer (ETFE), a tetrafluoroethylene/hexafluoropropylene copolymer (TFE/HFP, FEP), tetrafluoroethylene/hexafluoropropylene/vinylidene fluoride copolymer (TFE/HFP/VDF, THV) and a tetrafluoroethylene/perfluoro(alkyl)vinyl ether copolymer (PFA). In addition, resins partially containing chlorine, such as polychlorofluoroethylene (PCTFE) and ethylene/chlorotrifluoroethylene copolymer (ECTFE), may also be used.

In the multilayer structure of the present invention, the thickness of each layer is not particularly limited and may be adjusted according to the kind of polymer constituting each layer, the total number of layers in the multilayer structure, usage and the like, but the thickness of each layer is determined by taking account of properties of the multilayer structure, such as an alcohol-containing gasoline barrier property, stress cracking resistance and flexibility. In a preferred embodiment, the thickness of the EVOH layer (A) is from 3 to 40% based on the thickness of the entire multilayer structure. If this thickness is less than 3%, the alcohol-containing gasoline barrier property is poor, whereas if it exceeds 40%, the stress cracking resistance is inferior. The thickness of the polyamide layer (B) stacked on the EVOH layer (A) is preferably from 30 to 200% based on the thickness of the EVOH layer (A). If the thickness of the polyamide layer is less than 30%, the effect of enhancing the stress cracking resistance cannot be exerted, whereas if it exceeds 200%, this is disadvantageous in view of cost.

Fig. 1 is a side view schematically showing a representative construction of the multilayer structure of the present invention. In Fig. 1, the intermediate layer 1 is an EVOH layer (A), the outer layers 2 and 3 sandwiching the intermediate layer 1 are a polyamide layer(B), and the outermost layers 4 and 5 are a polyolefin layer (C) or a modified polyolefin layer (D). In Fig. 1, a five-layer construction is shown, but the multilayer structure may comprise only an EVOH layer (A) and a polyamide layer (B) without using a polyolefin layer (C) and a modified polyolefin layer (D). Other variations are as described above.

The multilayer structure of the present invention is not particularly limited in its production method but may be produced, for example, by a known co-extrusion blow molding method where using a plurality of extruders capable of melting the resin of EVOH layer, the resin of polyamide layer and if desired, the resin of polyolefin layer or modified polyolefin layer, respectively, the resins are each melted, stacked and co-extruded as a molten parison from the distal end of the extrude, and the parison is held in molds, formed into a predetermined shape by injecting a pressurized fluid into the inside of the parison, solidified by cooling and then taken out.

The multilayer structure of the present invention has excellent performance of fuel barrier, particularly, permeation of gasoline or alcohol-containing gasohol (a mixture of gasoline and alcohol) in a high-temperature environment, as well as excellent stress cracking resistance during gasohol immersion and can be suitably used for hollow containers such as fuel tank, valves attached to a fuel tank, couplings for fuel hose, nozzles for canister connection, separators and fuel parts for the storage or transportation of fuel, such as a fuel tube.

### EXAMPLES

The present invention is described in greater detail below by referring to Examples and Comparative Examples, but the present invention is not limited to these Examples.

The methods for measuring the physical properties of the resins and molded articles used in Example and Comparative Examples are described below.

### [Measurement of Amount of Fuel Permeated]

A 200 mm-width multilayer film was prepared with a T-die by co-extrusion according to JIS Z0208 and cut out into a φ75 mm circular shape, and this film was used as a specimen. A fuel permeation test at a measurement atmosphere temperature of 65°C was performed by using this specimen. The fuel used was prepared by mixing ethanol with Fuel C (isooctane and toluene at a volume ratio of 1:1) to a volume ratio of 10%. The sample for the measurement of fuel permeation was disposed with the permeation face downward so that the fuel could always contact with the face, and the change of weight was measured every day. The fuel permeation coefficient per 1 mm of the film thickness (g·mm/m²·day) was calculated by dividing the change of weight per day by the cross-sectional area of the film.

### [Evaluation of Stress Cracking]

A 200 mm-width multilayer film was prepared with a T-die by co-extrusion and cut out into a JIS dumbbell No. 3, and this was used as a specimen. This specimen was dipped in a fuel prepared by mixing ethanol with Fuel C (isooctane and toluene at a volume ratio of 1:1) to a volume ratio of 10%, at 40°C for 3 hours under application of 10% tensile elongation, and then the presence or absence of cracking was confirmed.
(A) EVOH (Eval F101A, produced by Kuraray Co., Ltd.)
(B) Polyamide

### [Production of Polyamide 1 (B-1)]

Montmorillonite (100 g) with one unit of layered silicate having a thickness of 9.5 Å on average and having an average one-side length of about 0.1 µm was dispersed in 10 L of water and thereto, 51.2 g of 12-aminododecanoic acid and 24 mL of concentrated hydrochloric acid were added. After the diffusion for 5 minutes, the solution was filtered and the residue was thoroughly washed and vacuum-dried. By this operation, a composite material of ammonium 12-aminododecanoate ion and montmorillonite was prepared. The layered silicate content in the composite material was 80 wt%. Also, when this composite material was measured by X-ray diffraction, the interlayer distance of, the silicate was 18.0 Å.

In a 70 liter-volume autoclave, 10 kg of caprolactam, 1 kg of water and 200 g of the composite material prepared above were charged and stirred at 100°C until a uniform state was made in the reaction system. Subsequently, the inside of the tank was stirred at 260°C and 1.7 MPa for 1 hour and after discharging the pressure, polymerization was performed for 3 hours under atmospheric pressure while volatilizing the moisture content from the reaction vessel. When the reaction was completed, the polymer was taken out like a strand from the bottom nozzle of the reaction vessel, cooled and then cut to obtain a pellet comprising polyamide 6 resin and montmorillonite (hereinafter referred to as "(B-1) NCH(PA6))". The obtained pellet was subjected to extraction of unreacted monomer in hot water at 100°C and then vacuum-dried. When this mixture was analyzed by X-ray diffraction, the interlayer distance of the layered silicate was 100 Å or more.

### [Production of Polyamide 2 (B-2)]

A pellet comprising polyamide 6/66 resin and montmorillonite (hereinafter referred to as "(B-2)NCH(PA6/66)) was obtained by performing the same operation as in Production of Polyamide 1 (B-1) except for using 8.2 kg of caprolactam, 0.9 kg of hexamethylenediamine, 0.9 kg of adipic acid, 2 kg of water and 200 g of the composite material in place of 10 kg of ε-caprolactam, 1 kg of water and 200 g of the composite material in the production of Polyamide 1. When this mixture was analyzed by X-ray diffraction, the interlayer distance of layered silicate was 100 Å or more.

### [Production of Adhesive PE (C)]

An adhesive PE mixture (C) was produced by pellet-blending 70 wt% of HDPE (high-density polyethylene, Hizex H5202B, produced by Mitsui Chemicals, Inc.) and 30 wt% of acid-modified PE (Acid-Modified PE Modic AP, produced by Mitsubishi Chemical Corp.).

### Example 1:

Using materials shown in Table 1, (A), (B-1) and (C) were separately melted at an extrusion temperature of 230°C, 240°C and 190°C, respectively, and joined by an adapter for a four-layer T-die to obtain a multilayer film where a layer comprising adhesive PE (C), a layer comprising (B-1)NCH(PA6) and a layer comprising EVOH (A) were forming a layer constitution of (C)/(A)/(B-1)/(C) - 150/75/75/150 µm. The amount of fuel permeated was measured for the obtained multilayer film and the result is shown in Table 1.

### Example 2:

Using materials shown in Table 1, (A), (B-1) and (C) were separately melted at an extrusion temperature of 230°C, 240°C and 190°C, respectively, and joined by an adapter for a five-layer T-die to obtain a multilayer film where a layer comprising adhesive PE (C), a layer comprising (B-1)NCH(PA6) and a layer comprising EVOH (A) were forming a layer constitution of (C)/(B-1)/(A)/(B-1)/(C) = 150/37.5/75/37.5/150 µm. The amount of fuel permeated was measured for the obtained multilayer film and the result is shown in Table 1.

### Example 3:

A multilayer film was obtained in the same manner as in Example 2 except for changing (B-1)NCHPA6 to (B-2)NCH(PA6/66). The amount of fuel permeated was measured for the obtained multilayer film and the result is shown in Table 1.

### Comparative Example 1:

Using materials shown in Table 1, (A) and (C) were separately melted at an extrusion temperature of 230°C and 190°C, respectively, and joined by an adapter for a three-layer T-die to obtain a multilayer film where a layer comprising adhesive PE (C) and a layer comprising EVOH (A) were forming a layer constitution of (C)/(A)/(C) = 150/150/150 µm. The amount of fuel permeated was measured for the obtained multilayer film and the result is shown in Table 1.

### Comparative Example 2:

A multilayer film was obtained in the same manner as in Comparative Example 1 except for changing EVOH (A) to (B-1)NCHPA6. The amount of fuel permeated was measured for the obtained multilayer film and the result is shown in Table 1.

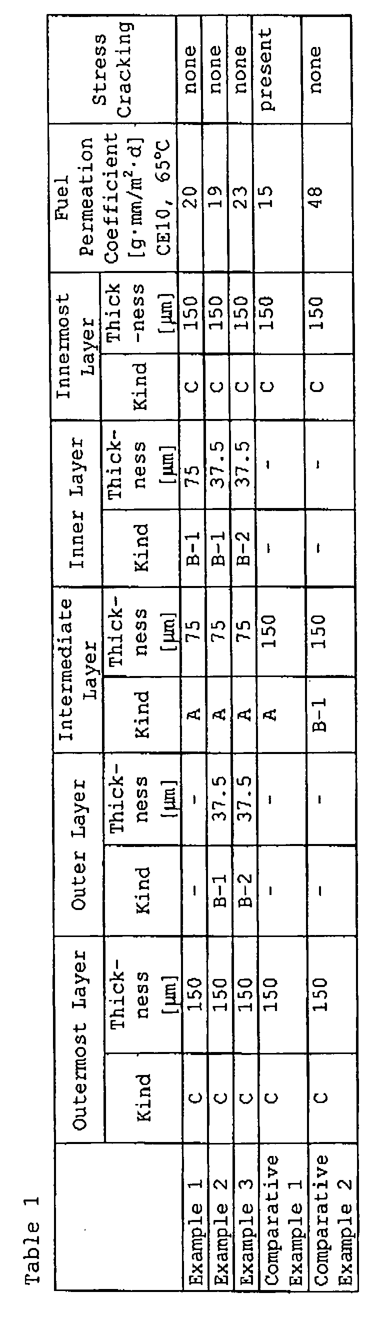

### INDUSTRIAL APPLICABILITY

According to the present invention, an EVOH layer and a polyamide layer having dispersed therein a layered silicate are used in combination, as a barrier layer, so that a multilayer structure having excellent performance of fuel barrier, particularly, barrier of an alcohol-containing fuel in a high-temperature environment, as well as excellent stress cracking resistance can be obtained.

This multilayer structure can be suitably used for hollow containers such as fuel tanks, valves attached to a fuel tanks, couplings for fuel hose, nozzles for canister connection, separators and fuel parts for the storage or transportation of fuel, such as a fuel tube.

## Claims

1. A multilayer structure, with excellent fuel barrier performance, comprising at least two layers of saponified ethylene-vinyl acetate copolymer (EVOH) layer and polyamide layer, said polyamide layer comprising 100 parts by weight of a polyamide resin and from 0.2 to 5 parts by weight of a layered silicate uniformly dispersed in the polyamide resin.

2. A multilayer structure, with excellent fuel barrier performance, comprising two polyamide layers having interposed therebetween a saponified ethylene vinyl acetate copolymer (EVOH) layer, the polyamide layer comprising 100 parts by weight of a polyamide resin and from 0.2 to 5 parts by weight of a layered silicate uniformly dispersed in the polyamide resin.

3. The multilayer structure as claimed in claim 1 or 2, which further comprises a polyolefin layer.

4. The multilayer structure as claimed in claim 3, wherein the polyolefin is modified with an unsaturated carboxylic acid or a derivative thereof.

5. The multilayer structure as claimed in claim 3, wherein the EVOH layer or polyamide layer and the polyolefin layer are stacked through a polyolefin layer modified with an unsaturated carboxylic acid or a derivative thereof.

6. The multilayer structure as claimed in claim 1 or 2, wherein the layered silicate has a one-side length of 0.002 to 1 µm and a thickness of 6 to 20 Å and is uniformly dispersed in the polyamide resin while keeping each interlayer distance 20 Å or more, on average.

7. The multilayer structure as claimed in any one of claims 1 to 6, wherein the thickness of the EVOH layer is from 3 to 40% of the thickness of the entire multilayer structure and the thickness of the polyamide layer stacked on said EVOH layer is from 30 to 200% of the thickness of the EVOH layer.

8. A hollow container using the multilayer structure claimed in any one of claims 1 to 7.

9. A fuel part using the multilayer structure claimed in any one of claims 1 to 7.
